# EUROPÄISCHE PATENTSCHRIFT

(11) **EP 3 445 630 B1**
(45) Veröffentlichungstag und Bekanntmachung des Hinweises auf die Patenterteilung: **29.06.2022**
(21) Anmeldenummer: 16726506.5
(22) Anmeldetag: 24.05.2016
(51) Int. Cl.: B61F 5/00, B61F 5/24, B61H 1/00, B61H 5/00, F16D 55/224, B61F 5/32

(54) **FAHRWERK FÜR EIN SCHIENENFAHRZEUG**
RUNNING GEAR FOR A RAIL VEHICLE
TRAIN ROULANT POUR UN VÉHICULE FERROVIAIRE

(43) Veröffentlichungstag der Anmeldung: 27.02.2019
(73) Patentinhaber: Siemens Mobility Austria GmbH, 1210 Wien (AT)
(72) Erfinder: MOSER, Christian, 8042 Graz (AT); SEIFRIED, Radovan, 2000 Maribor (SI)
(74) Vertreter: Deffner, Rolf
(86) Internationale Anmeldenummer: PCT/EP2016/061656
(87) Internationale Veröffentlichungsnummer: WO 2017/202449

(56) Entgegenhaltungen:
- EP-B1- 0 870 664
- EP-B1- 1 340 664
- WO-A1-2014/177417
- DE-A1- 4 136 926
- DE-A1- 19 819 467
- DE-U1- 9 421 109

## Beschreibung

Die Erfindung betrifft ein Fahrwerk für ein Schienenfahrzeug, mit zumindest einem Fahrwerksrahmen, zumindest einem Radsatz bzw. zumindest einem Räderpaar, zumindest zwei Radsatzführungsbuchsen, zumindest zwei Primärfedern sowie zumindest einer Bremseinheit.

Fahrwerke für Schienenfahrzeuge können beispielsweise Klotzbremsen, Scheibenbremsen, Magnetschienenbremsen, Wirbelstrombremsen oder elektrodynamische Bremsen etc. aufweisen, wobei auch gemischte Ausrüstungen, d.h. z.B. die Kombination einer Scheibenbremse mit einer Magnetschienenbremse, möglich sind.

Klotz- oder Scheibenbremseinheiten von Fahrwerken für Schienenfahrzeuge werden in bekannter Weise mittels Konsolen auf einem Fahrwerksrahmen angeordnet. Über einen Bremsaktuator, der beispielsweise als Pneumatikzylinder oder als Hydraulikzylinder etc. ausgeführt sein kann, werden Kräfte erzeugt, die beispielsweise über ein Gestänge übertragen werden und auf einen Bremsklotz oder einen Bremsbelag wirken.

Der Bremsklotz oder der Bremsbelag legt sich aufgrund der erzeugten Kräfte und einer Auslenkung des Gestänges an ein Rad oder eine Bremsscheibe an, wodurch eine Reibpaarung entsteht. Die Bremsscheibe kann beispielsweise auf einer Radsatzwelle oder auf dem Rad gelagert sein.

Aufgrund der in der Reibpaarung herrschenden Kontaktkräfte wird eine Bremswirkung auf einen Radsatz bzw. das Rad erzeugt und die Fahrgeschwindigkeit des Fahrwerks bzw. des Schienenfahrzeugs verringert. Der Bremsklotz oder der Bremsbelag muss während eines Bremsvorgangs ohne Unterbrechung an dem Rad oder der Bremsscheibe anliegen und die für die geforderte Bremswirkung erforderlichen Kontaktkräfte erzeugen bzw. halten.

Wirbelstrombremseinheiten werden in bekannter Weise in geringem Abstand zu Schienenoberkanten, Rädern oder Bremsscheiben geführt. Auf Wirbelstrombremseinheiten angeordnete Elektromagnete erzeugen instationäre Magnetfelder, welche eine Bremswirkung auf Fahrwerke verursachen.

Fahrwerke für Schienenfahrzeuge müssen darüber hinaus eine hohe Fahrsicherheit sowie lange Standzeiten aufweisen. Beide Eigenschaften können beispielsweise durch die Anordnung einer aktiven Radsatz- bzw. Radsteuerung verbessert werden. Das gezielte Stellen von Radsätzen bzw. Rädern durch aktive Verdrehung derselben um deren Hochachsen dient in bekannter Weise dazu, instabile Fahrzustände zu verhindern. Ferner wird durch den Einsatz einer aktiven Radsatz- bzw. Radsteuerung und das Anpassen von Radsatz- bzw. Radstellungen entsprechend einer Gleisgeometrie eine Verminderung von Verschleiß bzw. Rollkontaktermüdung (Rolling Contact Fatigue, RCF) im Kontakt zwischen Rädern und Schienen erzielt.

Nach dem Stand der Technik beschreibt beispielsweise die EP 0 870 664 B1 ein Verfahren zur Radsatzführung von Schienenfahrzeugen. Beispielhaft wird unter anderem eine Einrichtung gezeigt, bei welcher eine Zweikammer-Fluidbuchse zwischen einem Schwingarm und einem Fahrwerksrahmen angeordnet ist, die eine Relativbewegung zwischen dem Schwingarm und dem Fahrwerksrahmen erzeugt und dadurch einen Radsatz-Stellwinkel einstellt.

Die EP 0 870 664 B1 offenbart keine Reibungsbremseinheit. Ordnet man jedoch eine Reibungsbremseinheit auf dem Fahrwerksrahmen an, müssen die von der in der EP 0 870 664 B1 beschriebenen Zweikammer-Fluidbuchse erzeugten Relativbewegungen zwischen dem Fahrwerksrahmen und dem Schwingarm bzw. dem Radsatz von der Reibungsbremseinheit ausgeglichen werden, da diese Relativbewegungen einen dynamisch veränderlichen Abstand zwischen dem Bremsklotz oder dem Bremsbelag und dem Rad oder der Bremsscheibe bewirken, d.h. eine ungewollte Verringerung von für eine Bremsung erzeugten Kontaktkräften ermöglichen. Der Ausgleich dieser Relativbewegungen muss in der Auslegung der Bremseinheit (z.B. der Hubbedarfsberechnung für einen Bremszylinder, der Dimensionierung eines Gestängestellers etc.) berücksichtigt werden.

In der WO 80/00682 wird eine Montageanordnung für eine Bremseinheit in einem Fahrwerk eines Schienenfahrzeugs vorgestellt. Die Bremseinheit ist in einer Weise auf einem Fahrwerksrahmen angeordnet, dass sie nur seitlich bewegbar ist und in diese seitliche Richtung durch ein sich mit dem Rad bewegendes Gestänge bzw. durch das Rad selbst mit geführt wird.

Der genannte Ansatz weist in seiner bekannten Form den Nachteil auf, dass die Bremseinheit auf dem Fahrwerksrahmen angeordnet ist, daher Bremskräfte unmittelbar in den Fahrwerksrahmen eingeleitet werden und diesen unmittelbar belasten.

Seitliche Relativbewegungen zwischen dem Fahrwerksrahmen und dem Rad, d.h. Bewegungen in Richtung einer Fahrwerksquerachse, werden aufgrund des genannten, sich mit dem Rad bewegenden Gestänges ausgeglichen. Relativbewegungen zwischen dem Fahrwerksrahmen und dem Rad in Richtung einer Fahrwerkslängsachse, die durch eine in der WO 80/00682 nicht offenbarte, aktive Rad- bzw. Radsatzsteuerung erzeugt werden, wirken sich jedoch auf den Abstand zwischen der Bremseinheit und dem Rad aus und müssen, um während einer Bremsung erforderliche Kontaktkräfte aufzubringen und zu halten, über Einrichtungen wie z.B. Gestängesteller ausgeglichen werden.

Die EP 1 340 664 B1 beschreibt ein Spurwechselfahrwerk für Schienenfahrzeuge mit vier Rädern, einem Fahrwerksrahmen sowie Primärfedern, wobei zwischen jedem der vier Räder und dem Fahrwerksrahmen ein Schwingarm angeordnet ist.

Die Schwingarme weisen hydraulische Bremseinheiten mit Bremszangen auf. Die Bremszangen erzeugen über Bremsbeläge, die auf an Antriebseinheiten angeflanschte Bremsscheiben drücken, Kontaktkräfte und somit eine Bremswirkung auf das Spurwechselfahrwerk.

Der genannte Ansatz weist in seiner bekannten Form den Nachteil auf, dass die Bremseinheiten in großem Abstand zu den Lagerstellen zwischen den Schwingarmen und dem Fahrwerksrahmen angeordnet sind, d.h. keiner großen Wirkung der Primärfedern unterliegen. Dadurch sind empfindliche Komponenten der Bremseinheiten, wie z.B. Bremszylinder, aus Rad-Schiene-Kontakten stammenden, mechanischen Einflüssen (z.B. Stößen) stark ausgesetzt und müssen mit dementsprechend großen Sicherheiten dimensioniert werden.

DE 41 36 926 A1 zeigt ein Fahrwerk mit Einzelrädern für eine Niederflurbahn, bei welcher Bremsen auf einer Schwinge, welche in Bereichen zwischen den Einzelrädern und einem Fahrwerksrahmen vorgesehen sind, gelagert sind.

In der DE 10 2010 047 417 B4 wird ein Radsatz für ein Schienenfahrzeug beschrieben, der zwei Radsatzlagergehäuse aufweist. Auf den Radsatzlagergehäusen ist eine Bremstraverse gelagert, auf der zwei Bremseinheiten mit je einer Bremszange angeordnet sind. Die Bremszangen weisen Bremsbeläge auf, die auf Radbremsscheiben drücken und über die Erzeugung von Kontaktkräften eine Bremswirkung auf den Radsatz bzw. das Schienenfahrzeug erzielen. Die Bremstraverse ist weiterhin über zwei Pendel an einem Fahrwerksrahmen oder einem Wagenkasten aufgehängt. Der genannte Ansatz weist in seiner bekannten Form den Nachteil großer konstruktiver Komplexität auf. Durch die Anordnung und Lagerung der Bremstraverse erhöhen sich die Teilezahl und die Masse des Fahrwerks.

Weiterhin vergrößern sich der mit dem Fahrwerk in Zusammenhang stehende Montageaufwand sowie die Kosten.

Der Erfindung liegt daher die Aufgabe zugrunde, ein gegenüber dem Stand der Technik verbessertes Fahrwerk anzugeben.

Erfindungsgemäß wird diese Aufgabe gelöst mit einem Fahrwerk der eingangs genannten Art,
bei dem die zumindest eine Bremseinheit auf einer Komponente des Fahrwerks angeordnet ist, welche den zumindest einen Radsatz bzw. das zumindest eine Räderpaar mit dem zumindest einen Fahrwerksrahmen verbindet, und
bei dem der Schwerpunkt der Bremseinheit an einer primärgefederten Position des Fahrwerks liegt.

Die Bremseinheit kann beispielsweise als Klotz-, Scheiben-oder Wirbelstrombremseinheit etc. ausgeführt sein. Bei einer Ausführung der Bremseinheit als Reibungsbremseinheit können beispielsweise Bremsklötze und Räder, Bremsbeläge und Bremsscheiben etc. als Reibpartner fungieren.

Die Bremseinheit kann z.B. auf einem Schwingarm angeordnet sein. Dadurch wird der Vorteil einer Entlastung des Fahrwerksrahmens von Kräften aus der zumindest einen Bremseinheit (Bremskräfte und Gewichtskraft der Bremseinheit) erzielt. Ferner sind keine Konsolen etc. für eine Verbindung der Bremseinheit mit dem Fahrwerksrahmen erforderlich wodurch sich die Masse des Fahrwerksrahmens sowie die Anzahl bzw. die Länge von Schweißnähten verringert.

Ist die Bremseinheit beispielsweise als auf den Radsatz wirkende Klotzbremseinheit oder Scheibenbremseinheit ausgeführt und auf dem Schwingarm angeordnet, beeinflussen Relativbewegungen zwischen dem Fahrwerksrahmen und dem Schwingarm, die von einer aktiven Radsatz- bzw. Radsteuerung des Fahrwerks erzeugt werden, die Bremseinheit nicht. Die Bremseinheit selbst sowie Einrichtungen auf der Bremseinheit, welche einen Distanzausgleich zwischen Reibpartnern (z.B. Bremsklötze oder Bremsbeläge) und einem Rad oder einer Bremsscheibe bewirken (z.B. ein Gestängesteller), müssen nicht für einen Ausgleich von Relativbewegungen zwischen der Bremseinheit und dem Rad oder der Bremsscheibe aufgrund der aktiven Radsatz- bzw. Radsteuerung ausgelegt werden.

Ferner ist bei einem Einsatz einer aktiven, zwischen dem Fahrwerksrahmen und dem Schwingarm wirkenden Radsatz- bzw. Radsteuerungen das Risiko von ungewollten Interaktionen zwischen Stellkräften auf den Radsatz bzw. das Räderpaar und Bremskräften gering. Die Möglichkeit einer unbeabsichtigten Vergrößerung, Verkleinerung oder Richtungsänderung der Stell- bzw. Bremskräfte ist eingeschränkt. Folglich werden gegenüber einem Sollwert stark abweichende Lenkwinkel des Radsatzes bzw. des Räderpaares, wie sie bei einer Anordnung der Bremseinheit auf dem Fahrwerksrahmen auftreten können, vermieden. Weiterhin wird dadurch auch stark ungleichmäßiges Verschleißverhalten der Reibpartner eingeschränkt.

Durch die Position des Schwerpunkts der Bremseinheit in einem primärgefederten Bereich des Fahrwerks erfolgt eine mechanische Entkopplung empfindlicher Komponenten (z.B. Bremszylinder) der Bremseinheit von dem Radsatz bzw. dem Räderpaar. Beispielsweise werden diese empfindlichen Komponenten vor über einen Rad-Schiene-Kontakt übertragenen Störungen, wie z.B. Stößen geschützt.

Die Bremseinheit kann aufgrund der beschriebenen Zusammenhänge kompakt, leicht und kostengünstig ausgeführt werden. Die nicht gefederten Massen des Fahrwerks können daher gering gehalten werden.

Eine vorteilhafte Lösung erhält man, wenn der Schwingarm einen ersten Schenkel und einen zweiten Schenkel aufweist, zwischen welchen der Fahrwerksrahmen mit dem Schwingarm verbunden ist. Durch diese Maßnahme wird ermöglicht, die Bremseinheit in unmittelbarer Nähe zu der Radsatzführungsbuchse, welche den Schwingarm mit dem Fahrwerksrahmen verbindet, anzuordnen. Dadurch wird ein großer Einfluss der Primärfedern auf die Bremseinheit und somit eine mechanische Entkopplung der Bremseinheit von aus einem Rad-Schiene-Kontakt stammenden Einflüssen erreicht.

Nachfolgend wird die Erfindung anhand von Ausführungsbeispielen näher erläutert.

Es zeigen beispielhaft:
- Fig. 1:: Einen Schrägriss einer beispielhaften Ausführung eines erfindungsgemäßen Fahrwerks, wobei ein Ausschnitt einer Radsatzwelle, ein Rad sowie ein Schwingarm dargestellt sind und, auf dem Schwingarm angeordnet, eine Bremseinheit gezeigt wird, und
- Fig. 2:: Einen Grundriss einer beispielhaften Ausführung eines erfindungsgemäßen Fahrwerks, wobei ein Ausschnitt eines Schwingarms sowie ein Ausschnitt eines Fahrwerksrahmens dargestellt sind.

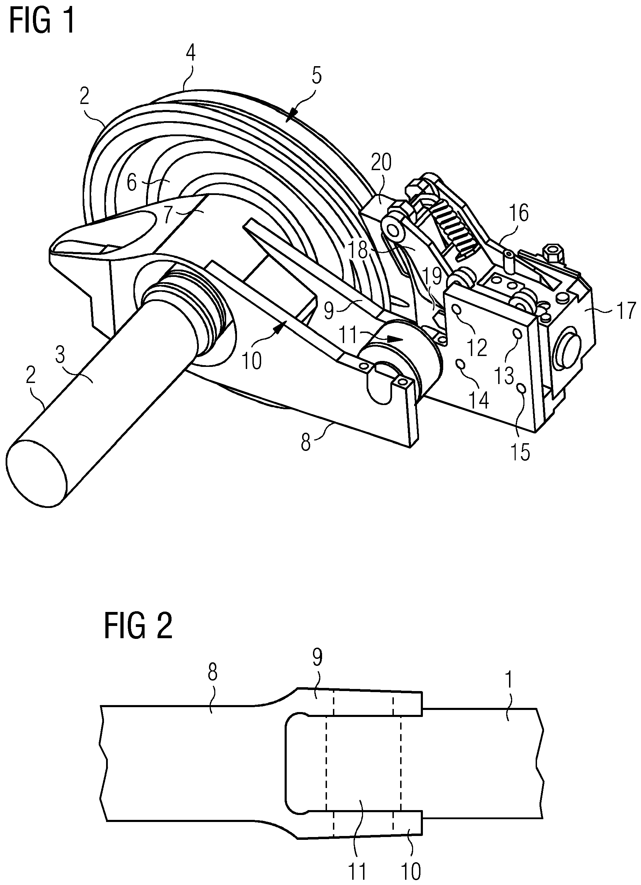

Ein in Fig. 1 dargestellter Schrägriss zeigt eine erste, beispielhafte Variante eines erfindungsgemäßen Fahrwerks für ein Schienenfahrzeug mit einem Ausschnitt eines Radsatzes 2 bzw. einer Radsatzwelle 3, einem Rad 4, einem Schwingarm 8, einer Radsatzführungsbuchse 11 sowie einer Bremseinheit 16. Das Fahrwerk weist insgesamt einen nicht dargestellten Fahrwerksrahmen 1 und zwei Radsätze 2 auf. Je Radsatz 2 sind eine Radsatzwelle 3, zwei Räder 4, zwei Schwingarme 8, zwei nicht gezeigte Radsatzlager, zwei Radsatzlagergehäuse 7, zwei Radsatzführungsbuchsen 11, zwei nicht dargestellte Primärfedern sowie zwei Bremseinheiten 16 angeordnet.

Das Fahrwerk weist eine Innenlagerung auf, d.h. Radsatzlager, Radsatzlagergehäuse 7 und Schwingarme 8 sind zwischen zwei Rädern 4 auf der diese zwei Räder 4 verbindenden Radsatzwelle 3 angeordnet.

Der Schwingarm 8 ist als Gussteil aus Gusseisen mit Kugelgraphit der Sorte EN-GJS-400-18-LT ausgeführt. Dabei handelt es sich um eine günstige Lösung. Erfindungsgemäß ist jedoch auch eine Ausführung des Schwingarms 8 beispielsweise als Frästeil aus Stahl, z.B. der Sorte S460 o.ä. möglich.

Der Schwingarm 8 umfasst das Radsatzlagergehäuse 7 und weist, ausgehend von diesem Radsatzlagergehäuse 7, einen ersten Schenkel 9 und einen zweiten Schenkel 10 auf. Zwischen dem ersten Schenkel 9 und dem zweiten Schenkel 10 ist die Radsatzführungsbuchse 11 angeordnet.

Der Schwingarm 8 ist über das Radsatzlagergehäuse 7 und das nicht gezeigte Radsatzlager drehbar mit der Radsatzwelle 3 sowie über die Radsatzführungsbuchse 11 mit dem in Fig. 1 nicht dargestellten, jedoch in Fig. 2 ausschnittsweise gezeigten Fahrwerksrahmen 1 verbunden.

Der Fahrwerksrahmen 1 ist über die nicht dargestellten Primärfedern, die in Bereichen zwischen den Radsatzlagergehäusen 7 und dem Fahrwerksrahmen 1 angeordnet sind, mechanisch entkoppelt. Im Bereich der Radsatzführungsbuchse 11 können der Schwingarm 8 und auf diesem angeordnete Komponenten als primärgefedert angesehen werden.

Der erste Schenkel 9 ist auf einer dem dargestellten Rad 4 zugewandten Seite angeordnet und weist eine größere Länge als der einer Radsatzmitte zugewandte, zweite Schenkel 10 auf. Er umfasst auf einem über den zweiten Schenkel 10 herausragenden Bereich eine erste Bohrung 12, eine zweite Bohrung 13, eine dritte Bohrung 14 und eine vierte Bohrung 15. Über die erste Bohrung 12, die zweite Bohrung 13, die dritte Bohrung 14 und die vierte Bohrung 15 und zwischen dem ersten Schenkel 9 und einem Bremszylinder 17 angeordnete, nicht dargestellte Schraubenverbindungen ist die Bremseinheit 16 mit dem Schwingarm 8 verbunden.

Bei dieser kraftschlüssigen Verbindung handelt es sich um eine günstige Lösung. Es jedoch auch andere Verbindungsarten zwischen dem Schwingarm 8 und der Bremseinheit 16 vorstellbar, wie z.B. formschlüssige oder stoffschlüssige Verbindungen.

Ferner ist es denkbar, die Bremseinheit 16 gelenkig mit dem Schwingarm 8 zu verbinden.

Es ist weiterhin auch vorstellbar, die Bremseinheit 16 nicht seitlich, sondern auf einer Unter- oder Oberseite des Schwingarms 8 anzuordnen.

Der Bereich der Verbindung zwischen der Bremseinheit 16 und dem Schwingarm 8 kann als primärgefedert angesehen werden.

Aus diesem Grund ist die Bremseinheit 16 gegenüber Einflüssen, die aus einem Rad-Schiene-Kontakt auf das Fahrwerk übertragen werden, in günstiger Weise mechanisch entkoppelt.

Die Bremseinheit 16 ist auf einer einem zwischen zwei Rädern 4 eingegrenzten Bereich des Radsatzes 2 abgewandten Seite des ersten Schenkels 9 vor einer Lauffläche 5 des Rades 4 angeordnet.

Sie ist als pneumatische Klotzbremseinheit ausgeführt und umfasst neben dem Bremszylinder 17 eine Hängelasche 18, einen mit der Hängelasche 18 verbundenen Bremsbelaghalter 19 und einen auf dem Bremsbelaghalter 19 gelagerten Bremsklotz 20. Über ein nicht dargestelltes Druckluftsystem des Schienenfahrzeugs sowie nicht dargestellte Druckleitungen und Anschlüsse wird der Bremszylinder 17 mit Druckluft versorgt. Die Druckleitungen verlaufen innerhalb des Schwingarms 8. Es ist jedoch auch eine Druckleitungsführung außerhalb des Schwingarms 8 möglich.

Über einen in dem Bremszylinder 17 herrschenden Druck wird eine Kraft erzeugt, die über die Hängelasche 18 und den Bremsbelaghalter 19 auf den Bremsklotz 20 übertragen wird. Der Bremsklotz 20 wird aufgrund dieser Kraft gegen die Lauffläche 5 des Rades 4 gedrückt und erzeugt eine Kontaktkraft. Aufgrund der Kontaktkraft wird eine verzögernde Wirkung auf das Rad 4 bzw. auf die Radsatzwelle 3 bzw. auf das Fahrwerk erzielt.

Fig. 2 zeigt einen Grundriss eines Ausschnitts einer beispielhaften Ausführungsvariante eines erfindungsgemäßen Fahrwerks.

Ein ausschnittsweise dargestellter Schwingarm 8 weist an seinem rechten Ende einen ersten Schenkel 9 und einen zweiten Schenkel 10 auf. Zwischen dem ersten Schenkel 9 und dem zweiten Schenkel 10 ist ein ausschnittsweise gezeigter Fahrwerksrahmen 1 über eine Radsatzführungsbuchse 11 mit dem Schwingarm 8 verbunden.

Das Fahrwerk weist nicht dargestellte Primärfedern auf, deren Wirkung sich von dem Fahrwerksrahmen 1 auf einen der Radsatzführungsbuchse 11 naheliegenden Bereich des Schwingarms 8 erstreckt. Im Bereich der Radsatzführungsbuchse 11 kann der Schwingarm 8 bzw. dessen erster Schenkel 9 und dessen zweiter Schenkel 10 als primärgefedert angenommen werden.

Auf dem ersten Schenkel 9 oder auf dem zweiten Schenkel 10 kann eine in Fig. 2 nicht dargestellte Bremseinheit 16 angeordnet werden.

Somit kann auch die Bremseinheit 16 als primärgefedert angenommen werden und ist daher gegenüber Einflüssen, die aus einem Rad-Schiene-Kontakt auf das Fahrwerk übertragen werden, in günstiger Weise mechanisch entkoppelt.

Das erfindungsgemäße Fahrwerk kann in verschiedenen Schienenfahrzeugen wie z.B. Lokomotiven, Triebzügen, Personen- und Güterwägen etc. eingesetzt werden.

Es sind innen- und außengelagerte Fahrwerksvarianten denkbar. Bei einem außengelagerten Fahrwerk sind Radsatzlager, Radsatzlagergehäuse 7 und Schwingarme 8 außerhalb eines von zwei auf einer Radsatzwelle 3 angeordneten Rädern 4 eingegrenzten Bereichs mit der Radsatzwelle 3 verbunden. Bremseinheiten 16 sind auf jenen Seiten von Schwingarmen 8 angeordnet, welche diesem eingegrenzten Bereich zugewandt sind.

Neben der in Fig. 1 dargestellten Ausführungsvariante mit einer als Klotzbremseinheit ausgeführten Bremseinheit 16 sind auch Lösungen mit Scheiben- und Wirbelstrombremseinheiten etc. denkbar. Bei einem Einsatz einer Scheibenbremseinheit drücken auf einer Bremszange angeordnete Bremsbeläge auf eine Bremsscheibe. Die Bremsscheibe kann beispielsweise auf einem Radsteg 6 angeordnet sein. Auf Schwingarmen 8 angeordnete Wirbelstrombremseinheiten wirken auf das Rad.

Weiterhin sind verschiedene Ausführungsvarianten einer Radsatzführung vorstellbar, z.B. aktive oder passive Varianten, d.h. mit oder ohne Steuerung bzw. Regelung etc.

Ferner sind neben Fahrwerksvarianten mit Radsätzen 2 auch Varianten mit Räderpaaren, die Losräder aufweisen etc. denkbar.

Darüber hinaus können in dem Fahrwerk ein oder mehrere Radsätze 2 bzw. Räderpaare angeordnet sein. Ein erfindungsgemäßes Fahrwerk kann beispielsweise eine C₀-Radsatzfolge gemäß dem Kodex 650 der Union internationale des chemins de fer (UIC) und somit drei angetriebene Radsätze 2 aufweisen.

### Liste der Bezeichnungen

- 1: Fahrwerksrahmen
- 2: Radsatz
- 3: Radsatzwelle
- 4: Rad
- 5: Lauffläche
- 6: Radsteg
- 7: Radsatzlagergehäuse
- 8: Schwingarm
- 9: Erster Schenkel
- 10: Zweiter Schenkel
- 11: Radsatzführungsbuchse
- 12: Erste Bohrung
- 13: Zweite Bohrung
- 14: Dritte Bohrung
- 15: Vierte Bohrung
- 16: Bremseinheit
- 17: Bremszylinder
- 18: Hängelasche
- 19: Bremsbelaghalter
- 20: Bremsklotz

## Patentansprüche

1. Fahrwerk für ein Schienenfahrzeug, mit zumindest einem Fahrwerksrahmen, zumindest einem Radsatz bzw. zumindest einem Räderpaar, zumindest zwei Radsatzführungsbuchsen, zumindest zwei Primärfedern sowie zumindest einer Bremseinheit, **dadurch gekennzeichnet,**
**dass** die zumindest eine Bremseinheit (16) auf einer Komponente des Fahrwerks angeordnet ist, welche den zumindest einen Radsatz (2) bzw. das zumindest eine Räderpaar mit dem zumindest einen Fahrwerksrahmen (1) verbindet, und
**dass** der Schwerpunkt der Bremseinheit (16) an einer im Bereich einer Radsatzführungsbuchse (11) als primärgefedert angenommenen Position des Fahrwerks liegt.

2. Fahrwerk nach Anspruch 1, **dadurch gekennzeichnet, dass** die Bremseinheit auf einem Schwingarm (8) angeordnet ist.

3. Fahrwerk nach Anspruch 1, **dadurch gekennzeichnet, dass** der zumindest eine Radsatz (2) bzw. das zumindest eine Räderpaar eine Innenlagerung aufweist.

4. Fahrwerk nach Anspruch 1, **dadurch gekennzeichnet, dass** der zumindest eine Radsatz (2) bzw. das zumindest eine Räderpaar eine Außenlagerung aufweist.

5. Fahrwerk nach Anspruch 1, **dadurch gekennzeichnet, dass** die Bremseinheit (16) als Klotzbremseinheit ausgeführt ist.

6. Fahrwerk nach Anspruch 1, **dadurch gekennzeichnet, dass** die Bremseinheit (16) als Scheibenbremseinheit ausgeführt ist.

7. Fahrwerk nach Anspruch 1, **dadurch gekennzeichnet, dass** die Bremseinheit (16) als Wirbelstrombremseinheit ausgeführt ist.

8. Fahrwerk nach Anspruch 2, **dadurch gekennzeichnet, dass** der Schwingarm (8) einen ersten Schenkel (9) und einen zweiten Schenkel (10) aufweist, zwischen welchen der Fahrwerksrahmen (1) mit dem Schwingarm (8) verbunden ist.

## Claims

1. Running gear for a rail vehicle, with at least one running gear frame, at least one wheelset or at least one wheel pair, at least two wheelset guide bushings, at least two primary springs as well as at least one brake unit, **characterised in that**
the at least one brake unit (16) is arranged on a component of the running gear that connects the at least one wheelset (2) or the at least one wheel pair to the at least one running gear frame (1), and
the centre of mass of the brake unit (16) lies at a position of the running gear that is assumed to be primary-suspended in the region of a wheelset guide bushing (11).

2. Running gear according to claim 1, **characterised in that** the brake unit is arranged on a swing arm (8).

3. Running gear according to claim 1, **characterised in that** the at least one wheelset (2) or the at least one wheel pair has an inner bearing.

4. Running gear according to claim 1, **characterised in that** the at least one wheelset (2) or the at least one wheel pair has an outer bearing.

5. Running gear according to claim 1, **characterised in that** the brake unit (16) is designed as a block brake unit.

6. Running gear according to claim 1, **characterised in that** the brake unit (16) is designed as a disc brake unit.

7. Running gear according to claim 1, **characterised in that** the brake unit (16) is designed as an eddy current brake unit.

8. Running gear according to claim 2, **characterised in that** the swing arm (8) has a first limb (9) and a second limb (10), between which the running gear frame (1) is connected to the swing arm (8).

## Revendications

1. Train roulant pour un véhicule ferroviaire, comportant au moins un châssis de train roulant, au moins un essieu monté ou au moins une paire de roues, au moins deux douilles de guidage d'essieu monté, au moins deux ressorts primaires ainsi qu'au moins une unité de freinage, **caractérisé**
**en ce que** ladite au moins une unité de freinage (16) est disposée sur un élément du train roulant, qui relie ledit au moins un essieu monté (2) ou ladite au moins une paire de roues audit au moins un châssis de train roulant (1), et
et **en ce que** le centre de gravité de l'unité de freinage (16) se situe à une position supposée être à suspension par ressort primaire du train roulant dans la zone d'une douille de guidage d'essieu monté (11).

2. Train roulant selon la revendication 1, **caractérisé en ce que** ladite unité de freinage est disposée sur un bras oscillant (8).

3. Train roulant selon la revendication 1, **caractérisé en ce que** ledit au moins un essieu monté (2) ou ladite au moins une paire de roues comporte un palier interne.

4. Train roulant selon la revendication 1, **caractérisé en ce que** ledit au moins un essieu monté (2) ou ladite au moins une paire de roues comporte un palier externe.

5. Train roulant selon la revendication 1, **caractérisé en ce que** ladite unité de freinage (16) est réalisée sous forme d'unité de freinage à sabot.

6. Train roulant selon la revendication 1, **caractérisé en ce que** ladite unité de freinage (16) est réalisée sous forme d'unité de freinage à disque.

7. Train roulant selon la revendication 1, **caractérisé en ce que** ladite unité de freinage (16) est réalisée sous forme d'unité de freinage à courant de Foucault.

8. Train roulant selon la revendication 2, **caractérisé en ce que** le bras oscillant (8) comporte une première branche (9) et une seconde branche (10), entre lesquelles le châssis de train roulant (1) est relié au bras oscillant (8).
